# EUROPEAN PATENT SPECIFICATION

(11) **EP 2 763 021 B1**
(45) Date of publication and mention of the grant of the patent: **09.09.2020**
(21) Application number: 14152465.2
(22) Date of filing: 24.01.2014
(51) Int. Cl.: G06F 3/0488

(54) **Method and apparatus for adjusting an attribute of a specific object in a web page in an electronic device**
Verfahren und Vorrichtung zur Einstellung eines Attributs eines bestimmten Objekts in einer Webseite in einer elektronischer Vorrichtung
Procédé et appareil de réglage d'attribut d'objet spécifique dans un site Web d'un dispositif électronique

(30) Priority: 30.01.2013 KR 20130010413
(43) Date of publication of application: 06.08.2014
(73) Proprietor: Samsung Electronics Co., Ltd., Gyeonggi-do 443-742 (KR)
(72) Inventor: Kim, Kyung-Tae, Gyeonggi-do 7 (KR); Kim, Jong-Seok, Gyeonggi-do (KR); Choi, Yoon-Jeong, Seoul (KR)
(74) Representative: Grootscholten, Johannes A.M.

(56) References cited:
- US-A1- 2006 036 955
- US-A1- 2008 082 911
- US-A1- 2008 168 404
- US-A1- 2009 183 068
- US-A1- 2011 141 144
- US-A1- 2012 110 438
- US-A1- 2012 304 113
- US-A1- 2012 306 930
- US-B1- 7 487 447
- US-B1- 8 307 279

## Description

### BACKGROUND OF THE INVENTION

### 1. Field of the Invention

The invention relates to a method in accordance with the preamble of clam 1. Such a method is disclosed in US 2012/304113 A1_{.} US 8 307 279 B1 also discloses relevant prior art.

### 2. Description of the Related Art

Portable terminals provide various functions for the convenience of the user. The smaller the mobile terminal is, the more difficult it is to mount various input keys. In this respect, methods for easily inputting information to small-sized mobile terminal have been researched and introduced. For example, mobile terminals may include a touch screen panel as an input means.

A mobile terminal that includes the touch screen panel as the input means is capable using the touch screen panel to control the screen display, such as, for example, by magnifying or demagnifying the screen.

The mobile terminal using the touch screen may use a multi-touch pinch zoom to magnify/demagnify the screen. The multi-touch pinch zoom detects two touch points, magnifies the screen when a distance between the two touch points lengthens, and demagnifies the screen when the distance between the two touch points shortens.

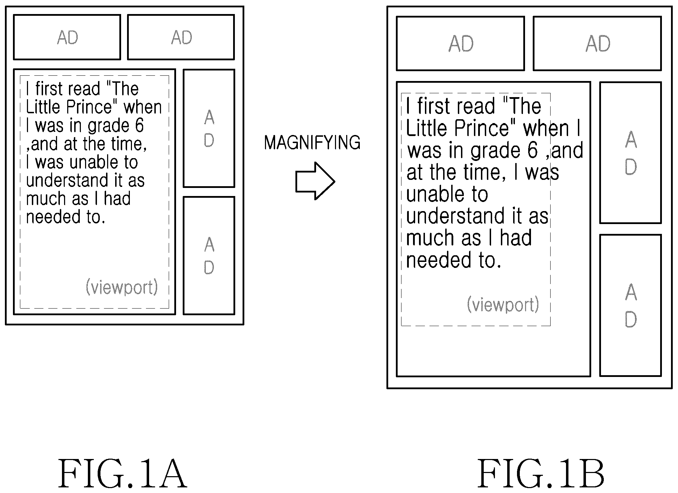

FIGS. 1A and 1B depict webpage screen magnification in a mobile terminal. As shown in FIGS. 1A and 1B, when the two touch points move away from each other and the webpage screen is magnified, the whole webpage is magnified and displayed. In so doing, since a screen size is fixed, some objects of the webpage may disappear. Specifically, part or all of the objects can disappear form a user's view. FIG. 1A depicts the screen before the magnification and FIG. 1B depicts the screen after the magnification.

When a user views an article in the webpage and lowers the magnification, a letter size is too small. When the magnification rises, the whole object (e.g., the article) is larger than the screen of the mobile terminal. Accordingly, the user needs to view the article by horizontally moving (hereafter, referred to as panning) the magnified webpage. Specifically, when the magnification of the whole article increases and some pieces of content are outside the boundary of the screen, the user can pan across the screen to the content.

As described above, when magnifying the webpage and viewing the webpage contents, the user needs to pan the magnified webpage to view the intended object in the screen because of the limited screen size of the mobile terminal.

### SUMMARY OF THE INVENTION

The present invention has been made to address at least the above problems and/or disadvantages and to provide at least the advantages described below. Accordingly, the invention provides a method in accordance with claim 1.

Another aspect provides a method and an apparatus for lessening user inconvenience in searching for a specific object by panning a magnified webpage in an electronic device.

Yet another aspect provides a user interface for adjusting a letter size of a specific object of a webpage in a web browser.

Still another aspect provides a user interface for adjusting a size of a specific object of a webpage in a web browser.

A further aspect provides a user interface for moving a specific object of a webpage in a web browser.

A further aspect provides a user interface for deleting a specific object of a webpage in a web browser.

According to one aspect, a method is provided for adjusting an attribute of a specific object of a webpage in an electronic device. The webpage is displayed. A first user gesture for selecting the specific object of the webpage is detected. A second user gesture for adjusting the attribute of the selected specific object of the webpage is detected. The attribute of the specific object is adjusted in response to the second user gesture. The webpage is displayed having the specific object with the attribute adjusted according to the second user gesture.

The first user gesture may comprise two touch points positioned on the specific object of the webpage.

Preferably, a first touch point of the two touch points is applied to an upper left portion of the specific object and a second touch point of the two touch points is applied to a lower right portion of the specific object, or the first touch point is applied to an upper right portion of the specific object and the second touch point is applied to a lower left portion of the specific object.

In one embodiment, after the first user gesture, the second user gesture fixes the first touch point of the multi-touch gesture and drags the second touch point of the multi-touch gesture. For example, the second touch point is dragged in downwards or upwards direction, to the right or to the left.

In one embodiment, after the first user gesture, the second user gesture pushes both of the first touch point and the second touch point of the multi-touch gesture in the same specified direction. The specified direction may be predefined.

In one embodiment, after the first user gesture, the second user gesture releases the first touch point of the multi-touch gesture and drag-and-drops the second touch point of the multi-touch to a point, i.e. position, where the specific object is to move.

According to a further aspect, a method is provided for adjusting an attribute of a specific object of a webpage in an electronic device. The webpage is displayed. A first user gesture is detected for selecting the specific object of the webpage. A second user gesture for adjusting the attribute of the selected specific object of the webpage is detected. The attribute of the specific object is adjusted in response to the second user gesture. Adjusting the attribute comprises adjusting a letter size of the specific object. The webpage is displayed with the specific object having the adjusted letter size, in consideration of a width of the specific object or a screen of the electronic device.

For example, it is determined whether a first touch of the multi-touch is dragged in a first direction. When the first touch of the multi-touch is dragged in the first direction, a letter size of the specific object is increased, and the specific object is displayed with the increased letter size in consideration of a width of the specific object or a screen of the electronic device. The method may further include, determining whether the first touch of the multi-touch is dragged in a second direction and decreasing the letter size of the specific object from the increased letter size to an original size, and displaying the specific object with the original letter size.

In one embodiment, adjusting the attribute of the specific object comprises adjusting the letter size of the specific object while keeping the width of the object fixed.

In one embodiment, the webpage comprises the specific object and at least one other object, and adjusting the attribute of the specific object comprises increasing or decreasing the letter size and the width of the specific object while keeping the size of the at least one other object fixed or while compensating the increased or decreased width of the specific object by correspondingly decreasing or increasing the size of the at least one other object.

In one embodiment, detecting the second user gesture comprises detecting a sweep motion which pushes both touch points in a specific direction. The attribute of the specific object is adjusted in response to said detected sweep motion and comprises deleting the specific object. Subsequently the webpage is reconstructed and the reconstructed webpage is displayed.

In one embodiment detecting the second gesture comprises detecting whether a first touch point of the two touch points is released and a second touch point of the two touch points is dragged, e.g. left, right, up or down. The attribute of the specific object is adjusted in response to said detected second gesture and comprises mvoing the specific object to the position of the dragged second touch point. Subsequently, the webpage is displayed, wherein the specific object has been moved.

The method may further include, storing information on a change in the letter size, a deletion of the specific object, or a movement of the specific object in association with Uniform Resource Locator (URL) information of the webpage and when reloading the webpage, displaying the webpage by changing the letter size of the specific object of the webpage, deleting the specific object of the webpage, or moving the specific object of the webpage based on the stored information.

The method may further include, after displaying the webpage by increasing the letter size of the specific object, detecting that one of the multi-touch is dragged in a second direction; and when one of the multi-touch is dragged in the second direction, adjusting and displaying the letter size of the specific object in an original size.

The method may further include after detecting the multi-touch for selecting the specific object of the webpage, detecting a sweep motion which pushes the multi-touch in a specific direction; and when detecting the sweep motion, deleting the specific object, reconstructing the webpage, and displaying the reconstructed webpage.

The method may further include after detecting the multi-touch for selecting the specific object of the webpage, detecting that one of the multi-touch is released and the other touch is dragged; moving the specific object to a point of the dragged touch; and displaying the webpage with the specific object moved.

Displaying the webpage with the specific object having the adjusted attribute comprises, adding nodes for adjusting the attribute of the specific object of the webpage to a Document Object Model (DOM) tree of source code of the current webpage, according to the second user gesture, generating a render tree based on the DOM tree comprising the nodes for adjusting the attribute of the specific object of the webpage, generating a layout to set a location or a size of each object by retrieving the generated render tree and outputting the generated layout.

Outputting the generated layout comprises, outputting the webpage by increasing or decreasing a size or a letter size of the specific object of the webpage, or outputting the webpage by deleting or moving the specific object of the webpage.

The method may further include, converting the DOM tree comprising the nodes for adjusting the attribute of the specific object of the webpage to the source code and storing the source code.

The method may further include, storing information of the nodes for adjusting the attribute of the specific object of the webpage in the DOM tree and when the webpage is reloaded after the information is stored, displaying the webpage using the information.

The method may further include, displaying an indication that the specific object of the webpage is selected.

According to yet another aspect, an electronic device is provided that includes one or more processors, a memory, and one or more programs stored to the memory and configured to be executed by the one or more processors. The one or more programs include instructions for displaying the webpage, detecting a first user gesture for selecting the specific object of the webpage, detecting a second user gesture for adjusting the attribute of the specific object of the webpage, and displaying the webpage having the specific object with the adjusted attributed according to the second user gesture. Preferably, the device comprises a touch screen display arranged to display the webpage.

The program further comprises instructions for converting the DOM tree comprising the nodes for adjusting the attribute of the specific object of the webpage to the source code, and storing the source code.

The program further comprises instructions for storing information of the nodes for adjusting the attribute of the specific object of the webpage in the DOM tree, and when the webpage is reloaded after the information is stored, displaying the webpage using the information.

The program further comprises an instruction for displaying an indication that the specific object of the webpage is selected.

The first user gesture may determine two touch points based on the specific object of the webpage. The two touch points may be determined based on the specific object of the webpage by applying a first touch to an upper left portion based on the specific object of the webpage and applying a second touch to a lower right portion based on the specific object of the webpage, or by applying a first touch to an upper right portion based on the specific object of the webpage and applying a second touch to a lower left portion based on the specific object of the webpage.

After the multi-touch of the first user gesture, the second user gesture may fix a first touch and drag a second touch down or up, or fix the first touch and drag the second touch to the right or the left. After the multi-touch of the first user gesture, the second user gesture may push both of a first touch and a second touch in a corresponding direction. After the multi-touch of the first user gesture, the second user gesture may release a first touch and drag-and-drop a second touch to a point to move.

The instruction for outputting the generated layout may output the webpage by increasing or decreasing a size or a letter size of the specific object of the current webpage, or output the webpage by deleting or moving the specific object of the current webpage.

The program may further include instructions for converting the DOM tree comprising the nodes for adjusting the attribute of the specific object of the webpage to the source code, and storing the converted source code.

The program may further include instructions for storing information of the nodes for adjusting the attribute of the specific object of the webpage in the DOM tree, and when the webpage is reloaded after the information is stored, displaying the webpage using the information.

The program may further include an instruction for displaying that the specific object of the webpage is selected.

### BRIEF DESCRIPTION OF THE DRAWINGS

The above and other aspects, features, and advantages of the present invention will be more apparent from the following detailed description when taken in conjunction with the accompanying drawings, in which:
FIGS. 1A and 1B illustrate webpage screen magnification in a conventional mobile terminal;
FIGS. 2A and 2B illustrate letter size increase of a specific object of a webpage in a mobile terminal;
FIGS. 3A and 3B illustrate letter size reduction of the specific object of the webpage in the mobile terminal;
FIGS. 4A and 4B illustrate specific object magnification of the webpage in the mobile terminal;
FIGS. 5A and 5B illustrate specific object magnification of the webpage in the mobile terminal;
FIGS. 6A and 6B illustrate specific object demagnification of the webpage in the mobile terminal;
FIGS. 7A, 7B, and 7C illustrate specific object deletion of the webpage in the mobile terminal;
FIGS. 8A, 8B, and 8C illustrate specific object movement of the webpage in the mobile terminal;
FIGS. 9A, 9B, 9C, and 9D illustrate source code corresponding to the webpage, which is interpreted and output;
FIG. 10 is a flowchart illustrating a method for adjusting the specific object of the webpage in the mobile terminal;
FIG. 11 is a flowchart illustrating a method for displaying the specific object processed of the webpage in the mobile terminal; and
FIG. 12 is a diagram illustrating an electronic device.

### DETAILED DESCRIPTION OF THE PRESENT INVENTION

The present invention is described in detail with reference to the accompanying drawings. The same or similar components may be designated by the same or similar reference numerals although they are illustrated in different drawings. Detailed descriptions of constructions or processes known in the art may be omitted to avoid obscuring the subject matter of the present invention.

The terms and words used in the following description and claims are not limited to their dictionary meanings, but are merely used by the inventor to enable a clear and consistent understanding of the invention. Accordingly, it should be apparent to those skilled in the art that the following description is provided for illustration purpose only.

It is to be understood that the singular forms "a," "an," and "the" include plural referents unless the context clearly dictates otherwise. Thus, for example, reference to "a component surface" includes reference to one or more of such surfaces.

By the term "substantially", it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

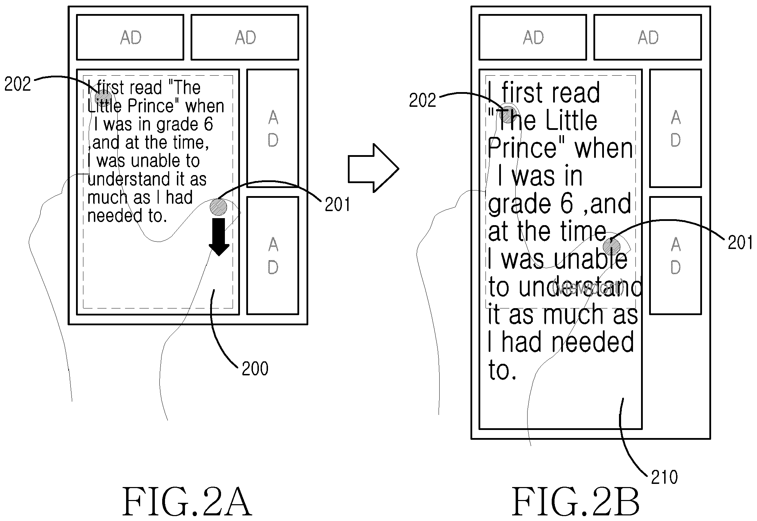

FIGS. 2A and 2B depict letter size increase of a specific object of a webpage in a mobile terminal.

Referring to FIGS. 2A and 2B, a user touches two points 201 and 202 on a touch screen and then selects his/her desired object 200 in the webpage by holding the pinch for a certain amount of time. Various objects in a web browser includes a window object, a document object, a location object, a history object, a frame object, a navigator object, an image object, and a form object.

For example, to select text in the window object of the webpage, the user touches the point 202 in the upper left portion the text and the point 201 in the lower right portion of the text, and then holds the multi-touch for a certain amount of time. The touch points for selecting a specific object of the webpage are not limited to the left and right portions, and the touch points can be selected by various user gestures. For example, the user may select a specific object by touching and dragging a specific shape (circle or quadrangle) around the specific object on the touch screen.

In so doing, the object 200 is selected in a region selected by the multi-touch, and the user is notified of the selection of the specific object using a focus ring. Specifically, an outline of the selected object is highlighted to notify the user of the object selection.

When the multi-touch selects the object and the lower right touch 201 is dragged down or the upper left touch 202 is dragged up, the letter size increases while a width of the selected specific object is maintained as shown in FIG. 2B. Since the letter size increases while the width of the selected specific object is maintained, only a height of a specific object 210 increases.

When the letter size increases while the width of the selected specific object is maintained, and the multi-touch may be applied again, causing the letter size to grow more while the width of the selected specific object is maintained.

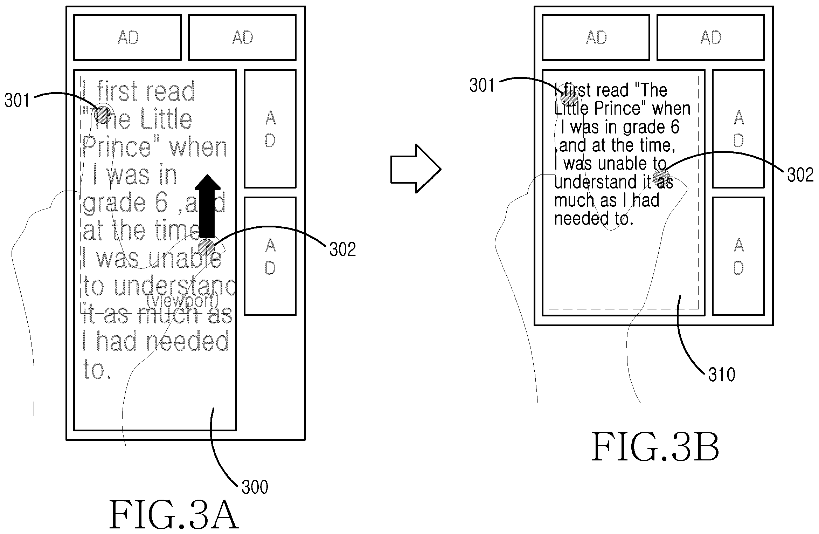

FIGS. 3A and 3B depict letter size reduction of a specific object of the webpage in the mobile terminal.

Referring to FIGS. 3A and 3B, when the multi-touch selects the object, the letter size increases while the width of the selected specific object is maintained by dragging down the lower right touch of the multiple touches, as shown in FIGS. 2A and 2B, and then a lower right touch 302 is dragged up or an upper left touch 301 is dragged down, as shown in FIG. 3A, an object 300 returns to the original letter size as shown in FIG. 3B. Notably, as the letter size decreases (to the original letter size) while the width of the object 300 is maintained, the height of the object 300 is reduced to the height of an original object 310).

In various implementations, depending on a drag distance of the one touch, the original width and height of the object can be maintained and the letter size can be smaller than the original size. Specifically, as the drag distance lengthens, the letter size can decrease proportionally.

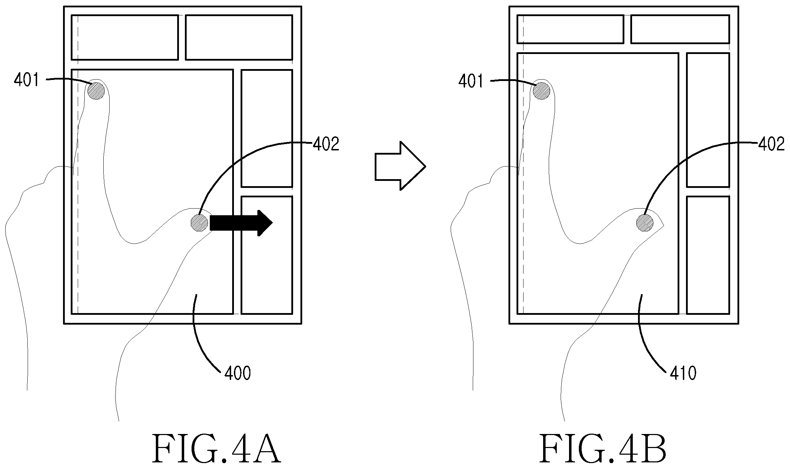

FIGS. 4A and 4B depict specific object magnification of the webpage in the mobile terminal.

Referring to FIGS. 4A and 4B, to highlight only a specific object 400 (e.g., image) in the webpage, the user touches two points 401 and 402 on the touch screen, holds the multi-touch for a certain amount of time, and thus selects the desired object 400 in the webpage. When the lower right touch 402 is dragged to the right or the upper left touch 401 is dragged to the left, the current webpage size is maintained and only the selected object is zoomed in. Specifically, while selected object 410 is zoomed in, the size of other objects of the current webpage is decreased in inversely proportional to the magnification of the selected object. As a result, the webpage size is maintained.

Specifically, the viewport of the user still contains the same objects by demagnifying the other objects in accordance with the selected object size adjustment.

When the selected object is zoomed in, either or both of the width and the height of the object can increase.

When the selected specific object is zoomed in, and one more multi-touch is applied by dragging the touch to the right as shown in FIG. 4B, the selected specific object can be further magnified.

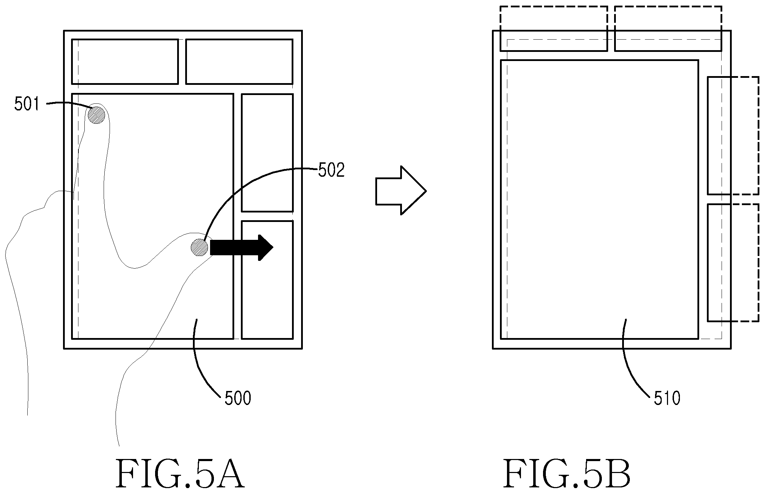

FIGS. 5A and 5B depict specific object magnification of the webpage in the mobile terminal.

Referring to FIGS. 5A ad 5B, to highlight only a specific object 500 (e.g., image) in the webpage, the user touches two points 501 and 502 on the touch screen, holds the multi-touch for a certain amount of time, and thus, selects the desired object 500 in the webpage. When the lower right touch 502 is dragged to the right or the upper left touch 501 is dragged to the left, selected object 510 is magnified and other objects in the current webpage maintain the current size.

In so doing, while the selected object 510 is magnified and the other objects maintain the original size, part or all of the other objects in the user's viewport can disappear.

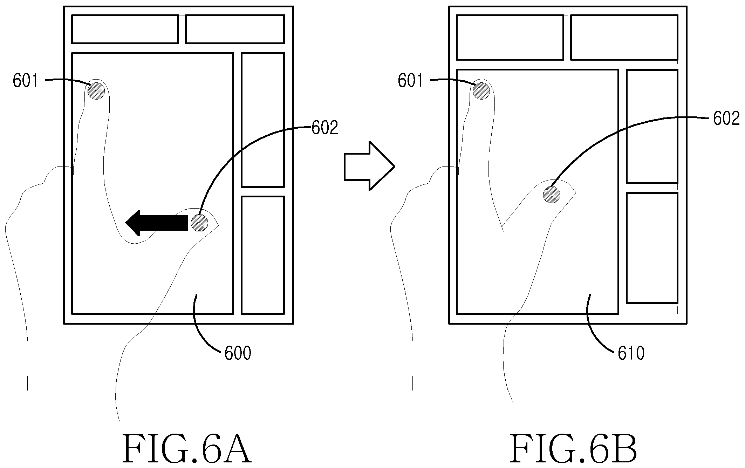

FIGS. 6A and 6B depict specific object reduction of the webpage in the mobile terminal.

Referring to FIGS. 6A and 6B, when the multi-touch selects an object, the selected specific object is zoomed in by dragging the lower right touch of the multi-touch to the right as shown in FIG. 4B, and then a lower right touch 602 is dragged to the left and an upper left touch 601 is maintained as shown in FIG. 6A, an object 600 returns to an original size 610 as shown in FIG. 6B.

In various implementations, depending on the drag distance of the one touch, the demagnified object can be smaller than the original size. Specifically, as the drag distance increases, the object size can reduce proportionally.

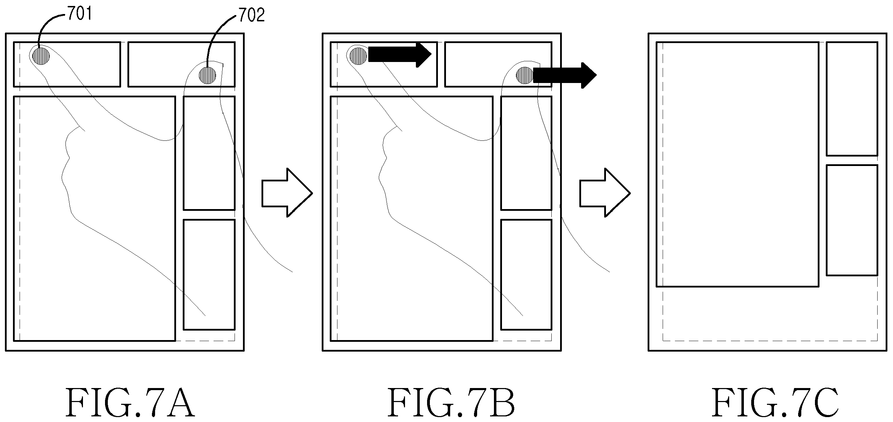

FIGS. 7A, 7B, and 7C depict specific object deletion of the webpage in the mobile terminal.

Referring to FIG. 7A, 7B and 7C, to hide a specific object in the webpage, when the user selects the object using multiple touches 701 and 702 as shown in FIG. 7A, and sweeps both touches out of the viewport or the screen as shown in FIG. 7B, the webpage with the deleted object is re-laid out as shown in FIG. 7C.

Alternatively, when the user selects the object using the multi-touch as shown in FIG. 7A, and sweeps both of the touches out of the viewport as shown in FIG. 7B, the locations of the objects of the webpage may not change and the selected objects may be disabled and not displayed.

The user gesture for deleting the specific object in the webpage is not limited to the sweep motion, and may be realized by various other user gestures.

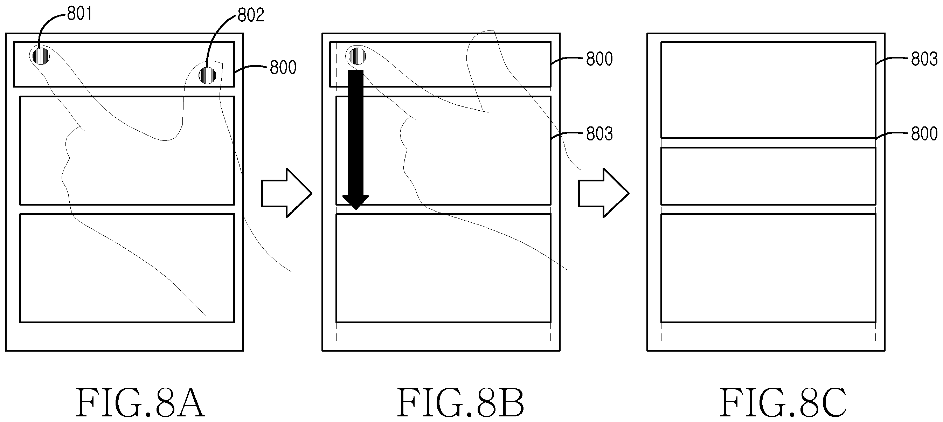

FIGS. 8A, 8B, and 8C depict specific object movement of the webpage in the mobile terminal.

Referring to FIGS. 8A, 8B, and 8C, to change the location of the specific object in the webpage, when the user selects an object 800 using multi-touch 801 and 802, as shown in FIG. 8A, releases one touch 802, and drags/drops the other touch 801 to his/her desired location, as shown in FIG. 8B, the specific object 800 is moved to the drop point, as shown in FIG. 8C. For example, when the specific object 800 is dragged and dropped on another object 803, the specific object 800 and the other object 803 switch locations.

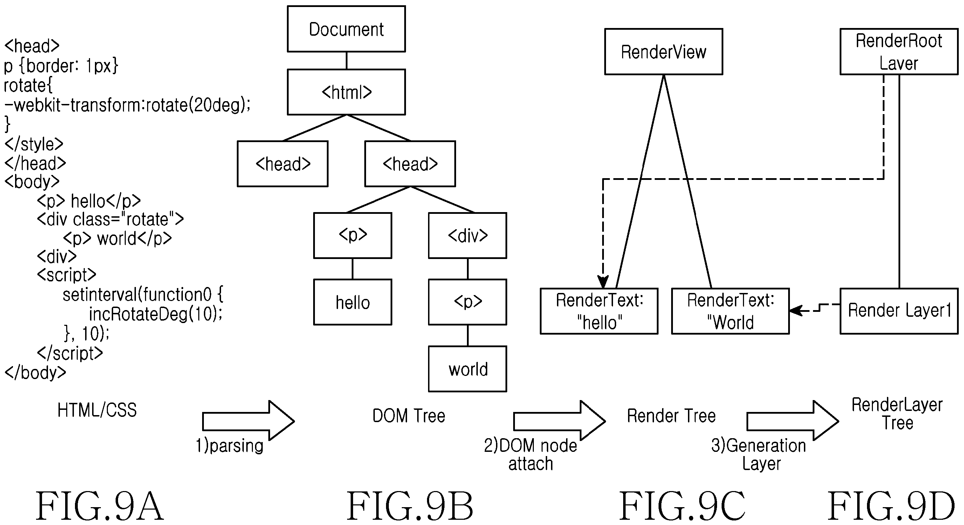

FIGS. 9A, 9B, 9C, and 9D depict source code corresponding to the webpage, which is interpreted and output.

Referring to FIGS. 9A, 9B, 9C, and 9D, the webpage includes source code written in HyperText Markup Language (HTML), eXtensible Markup Language (XML), Cascading Style Sheets (CSS), or Javascript.

For a client (i.e., the mobile terminal) to process and display the source code corresponding to the webpage, the mobile terminal downloads the source code, the HTML, or the XML document of the corresponding webpage from a server as shown in FIG. 9A, and then interprets the source code (hereafter, referred to as parsing) to generate a Document Object Model (DOM) tree using a web rendering engine, which displays the webpage on the screen. Specifically, components (tag, attribute, content) of the source code are parsed one by one to generate the DOM tree of FIG. 9B. The rendering engine can be embedded in the web browser being an application program, or implemented as a separate program.

The DOM tree generated using the parsing organizes the content of the HTML/XML document in the tree structure. To display the content on the screen, another data structure is required. In other words, the DOM tree stores the content in a memory, and a render tree structure is required to store location, size, and order information for the screen display as shown in FIG. 9C. The render tree organizes style elements and arrangements for the screen display, and displays the content in an adequate order on the screen.

When the render tree is generated, each render object is not given a location or a size. The location and the size of the render object are set (hereafter, referred to as layout) as shown in FIG. 9D.

Although it is not depicted in the drawing, nodes are displayed on the screen (hereafter, referred to as painting) by retrieving the style information from the render tree.

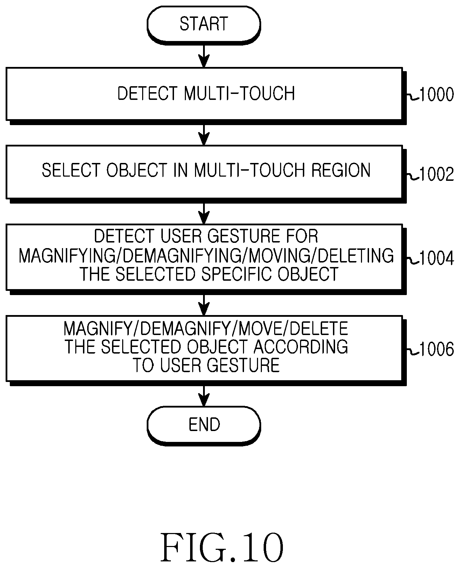

FIG. 10 is a flowchart illustrating a method for adjusting the specific object of the webpage in the mobile terminal.

Referring to FIG. 10, the mobile terminal detects the user's multi-touch for selecting the specific object of the corresponding webpage for a certain amount of time, in step 1000. For example, the mobile terminal detects the upper right and lower left touches of the specific object. Various user multi-touches can select the specific object in the corresponding webpage, and the touch is not limited to the right and left portions of the object. For example, the corresponding object may be selected by dragging a specific shape based on the corresponding object.

In step 1002, the mobile terminal selects the object in the multi-touch region based on the detected user's multi-touch. The multi-touch region can include one or more objects.

In step 1004, the mobile terminal detects the user gesture for magnifying, demagnifying, moving, or deleting the specific object selected in the corresponding webpage.

For example, to magnify the letter size of the selected specific object, the mobile terminal detects a user gesture, which fixes the first touch of the multi-touch and drags down or up the second touch (see FIGS. 2A and 2B). To zoom in the selected specific object, the mobile terminal detects a user gesture, which fixes the first touch of the multi-touch and drags the second touch to the right or the left (see FIGS. 4A, 4B, 5A, and 5B). To demagnify the letter size of the selected specific object, the mobile terminal detects a user gesture, which fixes the first touch of the multi-touch and drags up or down the second touch (see FIGS. 3A and 3B). To zoom out the selected specific object, the mobile terminal detects a user gesture, which fixes the first touch of the multi-touch and drags the second touch to the left or the right (see FIGS. 6A and 6B). To delete the selected specific object, the mobile terminal detects a user gesture, which sweeps the first touch and the second touch of the multi-touch out of the viewport in the same direction (see FIGS. 7A-7C). To move the selected specific object, the mobile terminal detects a user gesture, which releases the first touch of the multi-touch and drag-and-drops the second touch to the intended location (see FIGS. 8A-8C).

When the user gesture for magnifying, demagnifying, moving, or deleting the specific object selected in the corresponding webpage is detected, the source code of the current webpage does not change but an attribute value for magnifying, demagnifying, moving, or deleting the object is added as the node to the DOM tree of FIG. 9B. Specifically, one node exists in the DOM tree before the object is magnified, demagnified, moved, or deleted, and the changed node is added to the DOM tree after the object is magnified, demagnified, moved, or deleted.

In step 1006, the mobile terminal magnifies, demagnifies, moves, or deletes the selected specific object according to the detected user gesture based on the attribute value of the object added to the DOM tree.

After the DOM tree information is changed, i.e., the magnification, demagnification, movement, or deletion information of the specific object in the corresponding webpage is stored, when the user reloads the corresponding webpage, the specific object of the corresponding webpage may be adjusted and displayed based on the previous magnification, demagnification, movement, or deletion information of the specific object of the corresponding webpage.

Specifically, the style value adjusted based on ID and class of the adjusted specific object is stored in association with the corresponding webpage. Hence, when the webpage is loaded again, the webpage may be displayed by applying the style value of the adjusted object.

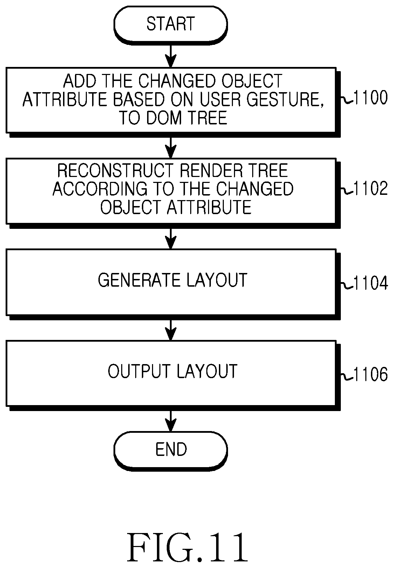

FIG. 11 is a flowchart illustrating a method for displaying the specific object processed of the webpage in the mobile terminal.

Referring to FIG. 11, in step 1100, the mobile terminal adds the attribute corresponding to the specific object to the DOM tree according to a user gesture, such as, for example, a gesture that fixes the first touch of the multi-touch and drags the second touch vertically or horizontally, a user gesture that sweeps the first touch and the second touch out of the viewport after the multi-touch, or a user gesture that releases the first touch after the multi-touch and drag-and-drops the second touch to an intended location. Specifically, the node for magnifying, demagnifying, moving, or deleting the object can be added or moved in the DOM tree for displaying the corresponding webpage as shown in FIG. 9B, or the attribute value of the corresponding node value can be changed.

In step 1102, the mobile terminal reconstructs the render tree based on the DOM tree modified according to the user gesture.

The mobile terminal generates the layout, in step 1104, and outputs the layout, in step 1106.

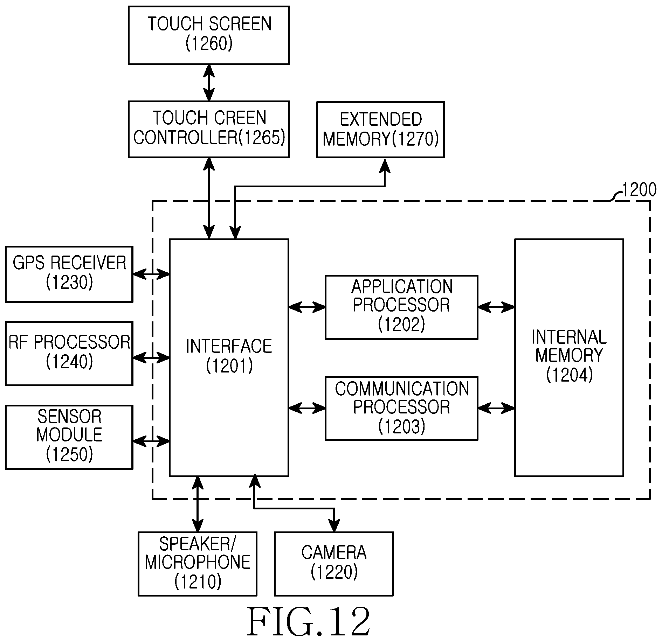

FIG. 12 is a block diagram of an electronic device.

The electronic device may be embodied as a portable electronic device, such as, for example, a portable terminal, a mobile terminal, a mobile pad, a media player, a tablet computer, a handheld computer, or a Personal Digital Assistant (PDA). The electronic device may be a portable electronic device combining two or more functions of those devices.

Referring to FIG. 12, the electronic device includes a controller 1200, a speaker/microphone 1210, a camera 1220 a Global Positioning System (GPS) receiver 1230, a Radio Frequency (RF) processor 1240, a sensor module 1250, a touch screen 1260, a touch screen controller 1265, and an extended memory 1270.

The controller 1200 includes an interface 1201, one or more processors 1202 and 1203, and an internal memory 1204. In some cases, the entire controller 1200 may be referred to as the processor. The interface 1201, the application processor 1202, the communication processor 1203, and the internal memory 1204 can be separate components or integrated onto one or more integrated circuits.

The application processor 1202 performs various functions for the electronic device by running various software programs, and the communication processor 1203 processes and controls voice communication and data communication. In addition to those typical functions, the processors 1202 and 1203 also execute a particular software module (instruction set) stored in the extended memory 1270 or the internal memory 1204 and conduct particular functions corresponding to the module. That is, the processors 1202 and 1203 carry out the present method for adjusting the specific object in the webpage in association with software modules stored in the extended memory 1270 or the internal memory 1204.

For example, the application processor 1202 detects the user's multi-touch for selecting the specific object of the corresponding webpage for a certain amount of time. The application processor 1202 detects the upper right and lower left touches of the specific object.

The application processor 1202 selects the object in the multi-touch region based on the detected user's multi-touch.

The application processor 1202 detects the user gesture for magnifying, demagnifying, moving, or deleting the specific object selected in the corresponding webpage, as described above.

For example, to magnify the letter size of the selected specific object, the application processor 1202 detects the user gesture which fixes the first touch of the multi-touch and drags down or up the second touch (see FIG. 2). To zoom in the selected specific object, the application processor 1202 detects the user gesture which fixes the first touch of the multi-touch and drags the second touch to the right or the left (see FIG. 4 and FIG. 5). To reduce the letter size of the selected specific object, the application processor 1202 detects the user gesture which fixes the first touch of the multi-touch and drags up or down the second touch (see FIG. 3). To zoom out the selected specific object, the application processor 1202 detects the user gesture which fixes the first touch of the multi-touch and drags the second touch to the left or the right (see FIG. 6). To delete the selected specific object, the application processor 1202 detects the user gesture which sweeps the first touch and the second touch of the multi-touch out of the viewport in the same direction (see FIG. 7). To move the selected specific object, the application processor 1202 detects the user gesture which releases the first touch of the multi-touch and drag-and-drops the second touch to the intended location (see FIG. 8).

Meanwhile, when the user gesture for magnifying/demagnifying/moving/deleting the specific object selected in the corresponding webpage is detected, the source code of the current webpage does not change but the attribute value for magnifying/demagnifying/moving/deleting the object is added as the node to the DOM tree of FIG. 9B. That is, one node exists in the DOM tree before the object is magnified/demagnified/moved/deleted, and the changed node is added to the DOM tree after the object is magnified/demagnified/moved/deleted.

Using the rendering engine, the application processor 1202 magnifies, demagnifies, moves, or deletes the selected specific object according to the detected user gesture based on the attribute value of the object added to the DOM tree.

Meanwhile, after the changed DOM tree information, that is, the magnification/demagnification/movement/deletion information of the specific object in the corresponding webpage is stored, when the user reloads the corresponding webpage, the specific object of the corresponding webpage may be adjusted and displayed based on the previous magnification/demagnification/movement/deletion information of the specific object of the corresponding webpage.
That is, the style value adjusted based on the ID and the class of the adjusted specific object is stored in association with the corresponding webpage. Hence, when the webpage is loaded again, the webpage may be displayed by applying the style value of the adjusted object.

To display the processed specific object in the webpage, the application processor 1202 adds the attribute corresponding to the specific object to the DOM tree according to the user gesture, for example, the gesture which fixes the first touch after the multi-touch and drags the second touch vertically or horizontally, the user gesture which sweeps the first touch and the second touch out of the viewport after the multi-touch, or the user gesture which releases the first touch after the multi-touch and drag-and-drops the second touch to the intended location. That is, the user gesture can add or move the node for magnifying/demagnifying/moving/deleting the object in the DOM tree for displaying the corresponding webpage as shown in FIG. 9B, or can change the attribute value of the corresponding node value.

The application processor 1202 reconstructs the render tree based on the DOM tree modified according to the user gesture, generates the layout, and outputs the layout.

Another processor can include one or more data processors, an image processor, or a CODEC. The data processors, the image processor, or the CODEC may be separately equipped or include a plurality of processors for different functions. The interface 1201 interconnects the touch screen controller 1265 and the extended memory 1270 of the electronic device.

The sensor module 1250 is coupled to the interface 1201 to allow various functions. For example, a motion sensor and an optical sensor can be coupled to the interface 1201 to detect a motion of the electronic device or to detect light from the outside. Other sensors such as, for example, a position determining system, a temperature sensor, or a biometric sensor can be connected to the interface 1201 to conduct related functions.

The camera 1220 is coupled to the sensor module 1250 through the interface 1201 to perform a camera function, such as photo and video clip recording.

The RF processor 1240 performs a communication function. For example, under control of the communication processor 1203, the RF processor 1240 converts an RF signal to a baseband signal and provides the baseband signal to the communication processor 1203, or converts a baseband signal output from the communication processor 1203 to an RF signal and transmits the RF signal. Herein, the communication processor 1203 processes the baseband signal according to various communication schemes. For example, the communication scheme can include, but not limited to, a Global System for Mobile communication (GSM) communication scheme, an Enhanced Data GSM Environment (EDGE) communication scheme, a Code Division Multiple Access (CDMA) communication scheme, a W-CDMA communication scheme, a Long Term Evolution (LTE) communication scheme, an Orthogonal Frequency Division Multiple Access (OFDMA) communication scheme, a Wireless Fidelity (Wi-Fi) communication scheme, a WiMax communication scheme, and/or a Bluetooth communication scheme.

The speaker/microphone 1210 can input and output an audio signal for voice recognition, voice reproduction, digital recording, and telephone function. That is, the speaker/microphone 1210 converts the voice signal to an electric signal or converts the electric signal to the voice signal.

The touch screen controller 1265 can be coupled to the touch screen 1260. The touch screen 1260 and the touch screen controller 1265 can detect the touch and the motion or their termination using, but not limited to, capacitive, resistive, infrared and surface sound wave techniques for determining one or more touch points with the touch screen 1260 and a multi-touch detection technique including various proximity sensor arrays or other elements.

The touch screen 1260 provides an input/output interface between the electronic device and the user. Specifically, the touch screen 1260 forwards a user's touch input to the electronic device. The touch screen 1260 also presents the output of the electronic device to the user. That is, the touch screen 1260 presents a visual output to the user. The visual output can be represented as text, graphic, video, and their combination.

The touch screen 1260 can employ various displays, examples of which include, but are not limited to, Liquid Crystal Display (LCD), Light Emitting Diode (LED), Light emitting Polymer Display (LPD), Organic LED (OLED), Active Matrix OLED (AMOLED) or Flexible LED (FLED).

The GPS receiver 1230 converts a signal received from an artificial satellite, to information such as location, speed, or time. For example, a distance between the satellite and the GPS receiver 1230 can calculated by multiplying the speed of light by a signal arrival time, and measures the location of the electronic device using the well-known triangulation by obtaining accurate positions and distances of three satellites.

The extended memory 1270 or the internal memory 1204 can include fast random access memory such as, for example, one or more magnetic disc storage devices and/or nonvolatile memory, one or more optical storage devices, and/or a flash memory (e.g., NAND and NOR).

The extended memory 1270 or the internal memory 1204 stores software. Software components include an operating system software module, a communication software module, a graphic software module, a user interface software module, an MPEG module, a camera software module, and one or more application software modules. Since the module being the software component can be a set of instructions, the module can be referred to as an instruction set. The module may be referred to as a program.

The operating system software includes various software components for controlling general system operations. The control of the general system operations includes, for example, memory management and control, storage hardware (device) control and management, and power control and management. The operating system software may process normal communication between various hardware devices and the software components (modules).

An application module includes instructions for adjusting the specific object in the webpage (see FIGS. 10 and 11).

For example, the application module detects the user's multi-touch for selecting the specific object of the corresponding webpage during a certain time, selects the object in the multi-touch region based on the detected user's multi-touch, and detects the user gesture for magnifying, demagnifying, moving, or deleting the specific object selected in the corresponding webpage. For example, to increase the letter size of the selected specific object, the application module detects the user gesture which fixes the first touch of the multi-touch and drags down or up the second touch (see FIG. 2). To zoom in the selected specific object, the application module detects the user gesture which fixes the first touch of the multi-touch and drags the second touch to the right or the left (see FIG. 4 and FIG. 5). To reduce the letter size of the selected specific object, the application module detects the user gesture which fixes the first touch of the multi-touch and drags up or down the second touch (see FIG. 3). To zoom out the selected specific object, the application module detects the user gesture which fixes the first touch of the multi-touch and drags the second touch to the left or the right (see FIG. 6). To delete the selected specific object, the application module detects the user gesture which sweeps the first touch and the second touch of the multi-touch out of the viewport in the same direction (see FIG. 7). To move the selected specific object, the application module detects the user gesture which releases the first touch of the multi-touch and drag-and-drops the second touch to the intended location (see FIG. 8).

Advantageously, to display the processed specific object in the webpage, the application module adds the attribute corresponding to the specific object to the DOM tree according to the user gesture, for example, the gesture which fixes the first touch after the multi-touch and drags the second touch vertically or horizontally, the user gesture which sweeps the first touch and the second touch out of the viewport after the multi-touch, or the user gesture which releases the first touch after the multi-touch and drag-and-drops the second touch to the intended location, reconstructs the render tree based on the DOM tree modified according to the user gesture, generates the layout, and outputs the layout.

The various functions of the electronic device as stated above and to be explained, can be executed by hardware and/or software and/or their combination including one or more stream processing and/or Application Specific Integrated Circuits (ASICs).

As set forth above, the webpage magnified vertically and/or horizontally is moved by adjusting the attribute of the specific object in the webpage, and thus user's inconvenience in searching for the specific object can be lessened.

In addition, embodiments can provide the user interface for adjusting the letter size of the specific object in the webpage so as to reduce the user inconvenience caused by the limited screen size of the mobile terminal, the user interface for adjusting the size of the specific object in the webpage, the user interface for moving the specific object of the webpage in the web browser, and a user interface for deleting the specific object of the webpage in the web browser. The scope of the invention is defined by the appended claims.

## Claims

1. A method for adjusting an attribute of a specific object (400, 410) of a webpage in an electronic device, the method comprising the steps of:
displaying the webpage;
detecting a first user gesture for selecting the specific object (400, 410) of the webpage, wherein the first user gesture includes a multi-touch gesture which is, for a designated time, maintained on the specific object (400, 410) of the webpage, the multi-touch gesture including a first touch (401) and a second touch (402);
in response to detecting the first user gesture, selecting the specific object (400, 410) of the webpage;
after selecting the specific object (400, 410) of the webpage, detecting a second user gesture for adjusting the attribute of the selected specific object of the webpage, wherein the second user gesture includes a drag gesture which drags the first touch (401) or the second touch (402);
adjusting the attribute of the specific object (400, 410) in response to the second user gesture; and
displaying the webpage with the specific object (400, 410) having the adjusted attribute,
wherein adjusting the attribute of the specific object (400, 410) in response to the second user gesture comprises increasing a size of the specific object (400, 410);
**characterized in that** the method further includes, in response to the second user gesture, decreasing, based on a direction of the drag gesture, the size of the other objects in the webpage inversely proportional to the increase in the size of the specific object (400, 410), whereby the size of the displayed webpage is maintained.

2. The method of claim 1, wherein the first touch (401) is applied to an upper left portion of the specific object (400, 410) and the second touch (402) is applied to a lower right portion of the specific object.

3. The method of any of the claims 1-2, wherein displaying the webpage with the specific object (400, 410) having the adjusted attribute comprises:
adding (1100) nodes for adjusting the attribute of the specific object (400, 410) of the webpage to a Document Object Model (DOM) tree of source code of the current webpage, according to the second user gesture;
generating (1102) a render tree based on the DOM tree comprising the nodes for adjusting the attribute of the specific object of the webpage;
generating (1104) a layout to set a location or a size of each object by retrieving the generated render tree; and
outputting (1106) the generated layout.

4. The method of claim 3, wherein outputting the generated layout comprises outputting the webpage by increasing the size of the specific object (400, 410) of the webpage, further comprising:
converting the DOM tree comprising the nodes for adjusting the attribute of the specific object of the webpage to the source code; and
storing the source code.

5. An electronic device, comprising:
a touch screen display (1260) arranged to display a plurality of user interface objects (400, 410);
one or more processors (1202);
memory (1204, 1207); and
one or more programs, wherein the one or more programs are stored in the memory (1204, 1207) and configured to cause, when executed by the electronic device, the electronic device to perform the method of any of claims 1 to 4.

## Patentansprüche

1. Verfahren zur Einstellung eines Attributs eines bestimmten Objekts (400, 410) einer Webseite in einem elektronischen Gerät, wobei das Verfahren die folgenden Schritte umfasst:
Anzeigen der Webseite;
Erkennen einer ersten Benutzergeste zum Auswählen des bestimmten Objekts (400, 410) der Webseite, wobei die erste Benutzergeste eine Mehrfach-Berührungsgeste beinhaltet, die für einen vorbestimmten Zeitraum auf dem bestimmten Objekt (400, 410) der Webseite aufrecht erhalten wird, wobei die Mehrfach-Berührungsgeste eine erste Berührung (401) und eine zweite Berührung (402) beinhaltet;
als Reaktion auf die Erkennung der ersten Benutzergeste Auswählen des bestimmten Objekts (400, 410) der Webseite;
nach dem Auswählen des bestimmten Objekts (400, 410) der Webseite, Erkennen einer zweiten Benutzergeste zum Einstellen des Attributs des bestimmten Objekts der Webseite, wobei die zweite Benutzergeste eine Ziehgeste beinhaltet, die die erste Berührung (401) oder die zweite Berührung (402) zieht;
Einstellen des Attributs des bestimmten Objekts (400, 410) als Reaktion auf die zweite Benutzergeste; und
Anzeigen der Webseite derart, dass das bestimmte Objekt (400, 410) das eingestellte Attribut aufweist,
wobei das Einstellen des Attributs des bestimmten Objekts (400, 410) als Reaktion auf die zweite Benutzergeste das Erhöhen der Größe des bestimmten Objekts (400, 410) umfasst;
**dadurch gekennzeichnet, dass** das Verfahren weiterhin Folgendes umfasst, als Reaktion auf die zweite Benutzergeste: basierend auf einer Richtung der Ziehgeste Verringern der Größe der anderen Objekte in der Webseite antiproportional zu der Erhöhung der Größe des bestimmten Objekts (400, 410), wodurch die Größe der angezeigten Webseite aufrecht erhalten wird.

2. Verfahren nach Anspruch 1, wobei die erste Berührung (401) an einem oberen linken Abschnitt des bestimmten Objekts (400, 410) angewendet wird und die zweite Berührung (402) an einem unteren rechten Abschnitt des bestimmten Objekts angewendet wird.

3. Verfahren nach einem der Ansprüche 1 und 2, wobei das Anzeigen der Webseite derart, dass das bestimmte Objekt (400, 410) das eingestellte Attribut aufweist, Folgendes umfasst:
Hinzufügen (1100) von Knoten zum Einstellen des Attributs des bestimmten Objekts (400, 410) der Webseite zu einem DOM-Baum (Document Object Model) des Quellcodes der aktuellen Webseite gemäß der zweiten Benutzergeste;
Erzeugen (1102) eines Renderbaums basierend auf dem DOM-Baum, der die Knoten zum Einstellen des Attributs des bestimmten Objekts der Webseite umfasst;
Erzeugen (1104) eines Layouts zum Festlegen der Position oder der Größe jedes Objekts durch Abrufen des erzeugten Renderbaums; und
Ausgeben (1106) des erzeugten Layouts.

4. Verfahren nach Anspruch 3, wobei das Ausgeben des erzeugten Layouts das Ausgeben der Webseite durch Erhöhen der Größe des bestimmten Objekts (400, 410) der Webseite umfasst, weiterhin umfassend:
Umwandeln des DOM-Baums, der die Knoten zum Einstellen des Attributs des bestimmten Objekts der Webseite umfasst, in den Quellcode; und
Speichern des Quellcodes.

5. Elektronisches Gerät, das Folgendes umfasst:
eine Berührungsbildschirmanzeige (1260), die dazu eingerichtet ist, eine Vielzahl von Benutzerschnittstellenobjekten (400, 410) anzuzeigen;
einen oder mehrere Prozessoren (1202);
einen Speicher (1204, 1207); und
wenigstens ein Programm, wobei das wenigstens eine Programm in dem Speicher (1204, 1207) gespeichert ist und dazu konfiguriert ist, zu bewirken, wenn es durch das elektronische Gerät ausgeführt wird, dass das elektronische Gerät das Verfahren nach einem der Ansprüche 1 bis 4 ausführt.

## Revendications

1. Procédé de réglage d'un attribut d'un objet spécifique (400, 410) d'une page Web dans un appareil électronique, le procédé comprenant les étapes consistant à :
afficher la page Web ;
détecter un premier geste de l'utilisateur visant à sélectionner l'objet spécifique (400, 410) de la page Web, ledit premier geste de l'utilisateur comprenant un geste à commandes tactiles multiples qui, pendant une durée stipulée, est maintenu sur l'objet spécifique (400, 410) de la page Web, ledit geste à commandes tactiles multiples comprenant une première commande tactile (401) et une deuxième commande tactile (402) ;
en réaction à la détection du premier geste de l'utilisateur, sélectionner l'objet spécifique (400, 410) de la page Web ;
après la sélection de l'objet spécifique (400, 410) de la page Web, détecter un deuxième geste de l'utilisateur visant à régler l'attribut de l'objet spécifique de la page Web sélectionné, ledit deuxième geste de l'utilisateur comprenant un geste de glisser consistant à faire glisser la première commande tactile (401) ou la deuxième commande tactile (402) ;
régler l'attribut de l'objet spécifique (400, 410) en réaction au deuxième geste de l'utilisateur ; et
afficher la page Web de telle façon que l'objet spécifique (400, 410) présente ledit attribut réglé ;
ledit réglage de l'attribut de l'objet spécifique (400, 410) en réaction au deuxième geste de l'utilisateur comprenant l'augmentation de la taille de l'objet spécifique (400, 410) ;
**caractérisé en ce que** le procédé comprend en outre, en réaction au deuxième geste de l'utilisateur et compte tenu de la direction du geste de glisser, la réduction de la taille des autres objets de la page Web de manière inversement proportionnelle à l'augmentation de la taille de l'objet spécifique (400, 410), moyennant quoi la taille de la page Web affichée est maintenue.

2. Procédé selon la revendication 1, dans lequel la première commande tactile (401) est appliquée à une partie supérieure gauche de l'objet spécifique (400, 410) et la deuxième commande tactile (402) est appliquée à une partie inférieure droite de l'objet spécifique.

3. Procédé selon l'une quelconque des revendications 1 et 2, dans lequel l'affichage de la page Web de telle façon que l'objet spécifique (400, 410) présente ledit attribut réglé comprend :
l'ajout (1100) de nœuds, permettant le réglage de l'attribut de l'objet spécifique (400, 410) de la page Web, à un arbre DOM (Document Object Model) du code source de la page Web courante, conformément au deuxième geste de l'utilisateur ;
la génération (1102) d'un arbre de rendu compte tenu de l'arbre DOM comprenant les nœuds permettant de régler l'attribut de l'objet spécifique de la page Web ;
la génération (1104) d'une mise en page permettant de fixer l'emplacement ou la taille de chaque objet par récupération de l'arbre de rendu généré ; et
la présentation (1106) de la mise en page générée.

4. Procédé selon la revendication 3, dans lequel la présentation de la mise en page générée comprend la présentation de la page Web avec augmentation de la taille de l'objet spécifique (400, 410) de la page Web, comprenant en outre :
la conversion de l'arbre DOM, comprenant les nœuds permettant de régler l'attribut de l'objet spécifique de la page Web, en ledit code source, et
le stockage du code source.

5. Appareil électronique, comprenant :
un écran tactile (1260) agencé pour afficher une pluralité d'objets d'interface utilisateur (400, 410),
un ou plusieurs processeurs (1202),
une mémoire (1204, 1207), et
un ou plusieurs programmes, lesdits un ou plusieurs programmes étant stockés dans la mémoire (1204, 1207) et étant conçus, lorsqu'ils sont exécutés par l'appareil électronique, pour amener l'appareil électronique à réaliser le procédé selon l'une quelconque des revendications 1 à 4.
